# EUROPEAN PATENT APPLICATION

(11) **EP 1 717 629 A1**
(43) Date of publication of application: **02.11.2006**
(21) Application number: 06008100.7
(22) Date of filing: 19.04.2006
(51) Int. Cl.: G02B 21/02

(54) **Objective lens protector and objective lens unit**

(30) Priority: 25.04.2005 JP 2005127138
(71) Applicant: Olympus Corporation, Tokyo 151-0072 (JP)
(72) Inventor: Fukuyama, Hiroya, Machida-shi Tokyo 194-0211 (JP); Yamashita, Hideto, Kamiina-gun Nagano 399-4511 (JP)
(74) Representative: von Hellfeld, Axel

(57) **Abstract**

The invention protects a front end (2) of an objective lens (4) from extreme external force in a non-operating state. There is provided an objective lens protector mounted on an objective lens or a microscope main body having the objective lens mounted thereon. The objective lens protector includes a covering member (6) movable between a protecting position where a front end of the objective lens is covered in a non-operating state and an operating position where the front end of the objective lens is exposed in an operating state.

## Description

### BACKGROUND OF THE INVENTION

### 1. FIELD OF THE INVENTION

The present invention relates to objective lens protectors and objective lens units.

This application is based on Japanese Patent Application No. 2005-127138, Japanese Patent Application No. 2004-339351, and Japanese Patent Application No. 2004-334896, the content of which is incorporated herein by reference.

### 2. DESCRIPTION OF RELATED ART

Microscope objective lenses with a wide variety of structures are known, as disclosed in Japanese Unexamined Patent Application Publication No. 2005-31425.

These known objective lenses include a plurality of lenses arranged in a substantially cylindrical lens barrel. A typical lens barrel is relatively large in diameter and thickness because high rigidity is required to support a plurality of lenses securely. For such a lens barrel, since only a cover glass at the front end thereof is brought near the outer surface of a specimen to be examined, the lens barrel itself can be constructed to have a relatively large outer diameter.

On the other hand, for microscope apparatuses designed to carry out in-vivo examination of a living organism, the front end of the objective lens needs to be inserted into the living organism. In other words, in order to examine a living organism less invasively to reduce the stress placed on the living organism, the front end of the objective lens needs to have a small diameter. However, an objective lens with a small-diameter front end is easy to break when subjected to external force, particularly, in a lateral direction of the lens barrel. Therefore, it is necessary to protect the small-diameter front end (or tip) from external force during transport and storage of the objective lens.

### BRIEF SUMMARY OF THE INVENTION

The present invention has been conceived in light of these circumstances, and it is an object of the present invention to provide an objective lens protector and an objective lens unit for protecting the front end of the objective lens from extreme external force in a non-operating state.

In order to achieve the above-described object, the present invention employs the following solutions.

A first aspect according to the present invention relates to an objective lens protector mounted on an objective lens or a microscope main body having the objective lens mounted thereon. The objective lens includes a covering member which can move between a protecting position where a front end of the objective lens is covered in a non-operating state and an operating position where the front end of the objective lens is exposed in an operating state.

According to the present invention, the covering member can be placed at the protecting position in a non-operating state, more particularly, while the objective lens is not used, to protect the front end of the objective lens from external force. On the other hand, when the objective lens is to be used, the covering member can be placed at the operating position to expose the front end of the objective lens, which can thus be inserted into a specimen.

In the first aspect of the above-described invention, the objective lens protector may further include a position locking mechanism configured to fix the covering member relative to the objective lens at the protecting position and the operating position.

With this structure, through the operation of the position locking mechanism, the covering member can be fixed at the protecting position in a non-operating state to ensure that the objective lens is reliably protected, whereas in an operating state, the covering member can be fixed at the operating position to prevent the covering member from interfering with the examination of the specimen with the objective lens.

In the first aspect of the above-described invention, the covering member is preferably formed in a tubular shape surrounding a side surface of the objective lens, and the covering member is preferably movable in an axial direction of the objective lens between the protecting position and the operating position.

With this structure, the tubular covering member arranged at the protecting position can cover the objective lens around the entire side surface thereof to more reliably protect the front end of the objective lens from external force in the radial direction. Furthermore, when the tubular covering member is arranged at the operating position, the objective lens can be exposed around the entire circumference thereof.

With the above-described structure, the covering member may include a plurality of tubular bodies arranged in the shape of a telescope.

With this structure, it is sufficient to move only a minimum required number of tubular bodies to expose the objective lens for use. Furthermore, the space occupied by the covering member when the objective lens is exposed can be reduced.

With the above-described structure of the present invention, the covering member preferably includes a plurality of tubular bodies arranged in the shape of a telescope, and an urging member which urges a corresponding tubular body towards the protecting position is preferably provided between the tubular bodies.

With this structure, each tubular body is urged to the protecting position through the operation of the urging member. Therefore, in an operating state the front end of the objective lens can be exposed by applying external force to each tubular body against the urging member, whereas in a non-operating state each tubular body is automatically urged to the protecting position by removing the external force to protect the front end of the objective lens.

With the above-described structure, the covering member may be formed in the shape of bellows made of a resilient member that is elastically deformable in an axial direction of the objective lens.

With this structure, not only can the covering member be constructed easily, but also the objective lens can be sealed to protect the side surface of the objective lens from foreign matter such as liquid when the covering member is placed at the protecting position.

With the above-described structure, the covering member may be made of a transparent material. As described above, the covering member is designed in the shape of a tube to cover the objective lens around the entire circumference of the side surface thereof. In this case, the interior of the objective lens can be seen even when the covering member is disposed at the protecting position because the covering member is made of a transparent member.

A second aspect according to the present invention relates to an objective lens unit including an objective lens and a covering member which is mounted on the objective lens. The covering member can move between a protecting position where a front end of the objective lens is covered in a non-operating state and an operating position where the front end of the objective lens is exposed in an operating state.

According to the present invention, the covering member can be placed at the protecting position in a non-operating state, more specifically, while the objective lens is not used, to protect the front end of the objective lens from external force. On the other hand, when the objective lens is to be used, the covering member can be placed at the operating position to expose the front end of the objective lens, which can thus be inserted into a specimen.

According to the objective lens protector of the first aspect of the present invention and the objective lens unit of the second aspect of the present invention, the front end of the objective lens can be protected from extreme external force in a non-operating state, whereas the objective lens can be exposed in an operating state to prevent the covering member from interfering with examination of a specimen.

### BRIEF DESCRIPTION OF THE SEVERAL VIEWS OF THE DRAWINGS

Fig. 1 is a perspective view of an objective lens unit and an objective lens protector according to a first embodiment of the present invention, where a covering member is disposed at a protecting position.
Fig. 2 is a front elevational view partially depicting the objective lens of Fig. 1, where the objective lens protector is removed from the objective lens unit.
Fig. 3 is a longitudinal sectional view partially depicting a locking mechanism of the objective lens unit shown in Fig. 1.
Fig. 4 is a front elevational view of a modification of the objective lens unit shown in Fig. 1, where the covering member is disposed at the protecting position.
Fig. 5 is a longitudinal sectional view partially depicting a locking mechanism of the objective lens unit shown in Fig. 4.
Fig. 6 is a longitudinal sectional view of an objective lens unit and an objective lens protector according to a second embodiment of the present invention.
Fig. 7 is a longitudinal sectional view of the objective lens unit shown in Fig. 6 in an operating state, where a small-diameter tip of the objective lens is inserted in a specimen.
Fig. 8 is a longitudinal sectional view of one modification of the objective lens unit and the objective lens protector shown in Fig. 6.
Fig. 9 is a longitudinal sectional view of the objective lens unit shown in Fig. 8 in an operating state, where a small-diameter tip of the objective lens is inserted in a specimen.
Fig. 10 is a longitudinal sectional view of another modification of the objective lens unit and the objective lens protector shown in Fig. 6.
Fig. 11 is a longitudinal sectional view of the objective lens unit shown in Fig. 10 in an operating state, where a small-diameter tip of the objective lens is inserted in a specimen.
Fig. 12 is a longitudinal sectional view of a modification of the objective lens unit and the objective lens protector shown in Fig. 10.
Fig. 13 is a schematic longitudinal sectional view of a microscope objective lens according to a first reference embodiment of a first reference example of the present invention.
Fig. 14 is a schematic longitudinal sectional view of a microscope objective lens unit having a cap mounted on the microscope objective lens shown in Fig. 13.
Fig. 15 is a diagram depicting image formation by focusing a beam through the microscope objective lens shown in Fig. 13.
Fig. 16 is a diagram depicting the microscope objective lens unit of Fig. 14 being immersed in a sterilizing solution.
Fig. 17 is a schematic longitudinal sectional view of one modification of the microscope objective lens shown in Fig. 13.
Fig. 18 is a schematic longitudinal sectional view of another modification of the microscope objective lens shown in Fig. 13.
Fig. 19 is a schematic longitudinal sectional view of a microscope objective lens according to a second reference embodiment of the first reference example of the present invention.
Fig. 20 is a schematic longitudinal sectional view of one modification of the microscope objective lens shown in Fig. 19.
Fig. 21 is a schematic longitudinal sectional view of a microscope objective lens according to a third reference embodiment of a second reference example of the present invention.
Fig. 22 is a diagram depicting image formation by focusing a beam through the microscope objective lens shown in Fig. 21.
Fig. 23 is an overall block diagram depicting a microscope including a microscope objective lens according to this reference embodiment.
Fig. 24 is a schematic longitudinal sectional view of a microscope objective lens according to a fourth reference embodiment of the second reference example of the present invention.
Fig. 25 is a schematic longitudinal sectional view of a microscope according to a fifth reference embodiment of the second reference example of the present invention.
Fig. 26 is a schematic longitudinal sectional view of an electrical insulator according to a sixth reference embodiment of the second reference example of the present invention.
Fig. 27 is a schematic longitudinal sectional view of an electrical insulator according to a seventh reference embodiment of the second reference example of the present invention.

### DETAILED DESCRIPTION OF THE INVENTION

### [First Embodiment]

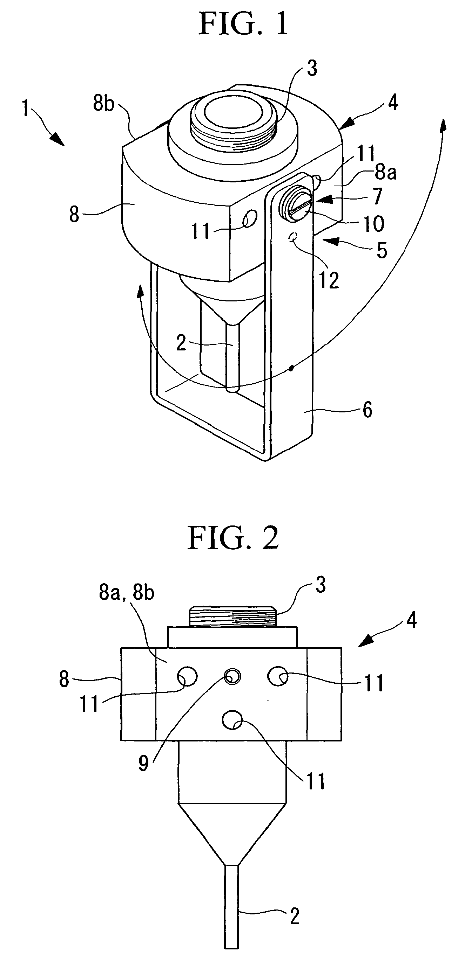

An objective lens protector and an objective lens unit according to a first embodiment of the present invention will now be described with reference to Figs. 1 to 3.

Referring to Fig. 1, an objective lens unit 1 according to this embodiment includes an objective lens 4 and an objective lens protector 5 mounted on the objective lens 4. The objective lens 4 has a small-diameter tip 2 at the front end thereof and a threaded mount 3 engaged with a microscope main body (not shown in the figure) at the rear end thereof.

The objective lens protector 5 includes, for example, a covering member 6 formed of a U-shaped metal sheet, and a locking mechanism 7 for retaining the covering member 6 at a predetermined angular position with respect to the objective lens 4.

A pair of parallel flat surfaces 8a and 8b, which are parallel to the axis of the objective lens 4, are formed on a large-diameter portion 8 of the objective lens 4. Furthermore, a screw hole 9 (refer to Fig. 2) is formed in each of the flat surfaces 8a and 8b. The covering member 6 is swingably mounted on the large-diameter portion 8 of the objective lens 4 with stepped screws 10 screwed into the screw holes 9 formed in the large-diameter portion 8. Thus, the covering member 6 can swing about the longitudinal axe of the stepped screws 10.

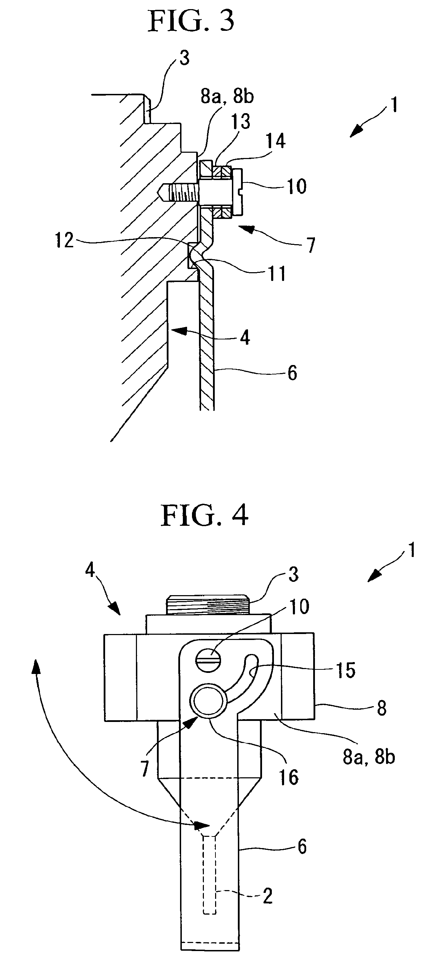

Referring to Figs. 2 and 3, the locking mechanism 7 includes three indentations 11 which are formed on each of the flat surfaces 8a and 8b at predetermined distances from the screw hole 9; protrusions 12 which are formed on the covering member 6 and fit in one of the indentations 11 on each side when the covering member 6 is placed at a predetermined angular position relative to the objective lens 4; and spring washers 13 disposed between the heads of the stepped screws 10 and the covering member 6.

The covering member 6 is constantly urged towards the flat surfaces 8a and 8b of the objective lens 4 against the heads of the stepped screws 10 due to the effect of the spring washers 13. In the figure, reference numeral 14 denotes flat washers.

The predetermined angular position corresponds to one of three positions: e.g., a protecting position at which the covering member 6 is maintained parallel to the axis of the objective lens 4 so that the front end of the objective lens 4 is covered with the covering member 6, and two operating positions at which the covering member 6 is rotated by angles of ±90° from the protecting position to expose the front end of the objective lens 4. When the covering member 6 is swung to a predetermined angular position relative to the objective lens 4, the protrusions 12 on the covering member 6 fit in the corresponding indentations 11 on the objective lens 4 due to the effect of the spring washers 13, so that the covering member 6 is prevented from swinging relative to the objective lens 4.

The operation of the objective lens unit 1 and the objective lens protector 5 with the above-described structure according to this embodiment will be described below.

Before a specimen, such as a laboratory animal, can be examined using the objective lens unit 1 according to this embodiment, the objective lens unit 1 needs to be mounted on a microscope main body (not shown in the figure) by means of the threaded mount 3. To do this, it is preferable that the covering member 6 be placed at the protecting position for covering the small-diameter tip 2 of the objective lens 4. By doing so, it is possible to prevent extreme external force that would damage the small-diameter tip 2 from being accidentally applied to the small-diameter tip 2 when the objective lens unit 1 is being mounted on the microscope main body.

Next, the covering member 6 is placed at the operating position with the objective lens unit 1 mounted on the microscope main body. More specifically, the protrusions 12 on the covering member 6 are disengaged from the corresponding indentations 11 on the flat surfaces 8a and 8b of the objective lens 4 by applying torque about the stepped screws 10 to the covering member 6 against the urging force of the spring washers 13 to turn the covering member 6 clockwise or counterclockwise about the stepped screws 10.

By doing so, the small-diameter tip 2 of the objective lens 4 covered with the covering member 6 is exposed. As a result, the covering member 6 does not interfere with the small-diameter tip 2 of the objective lens 4 when it is inserted into the specimen.

As described above, according to the objective lens unit 1 and the objective lens protector 5 of this embodiment, the small-diameter tip 2 of the objective lens 4 in a non-operating state can be prevented from being damaged simply by swinging the covering member 6 to the protecting position, whereas the small-diameter tip 2 of the objective lens 4 can easily be exposed when the covering member 6 is placed at an operating position.

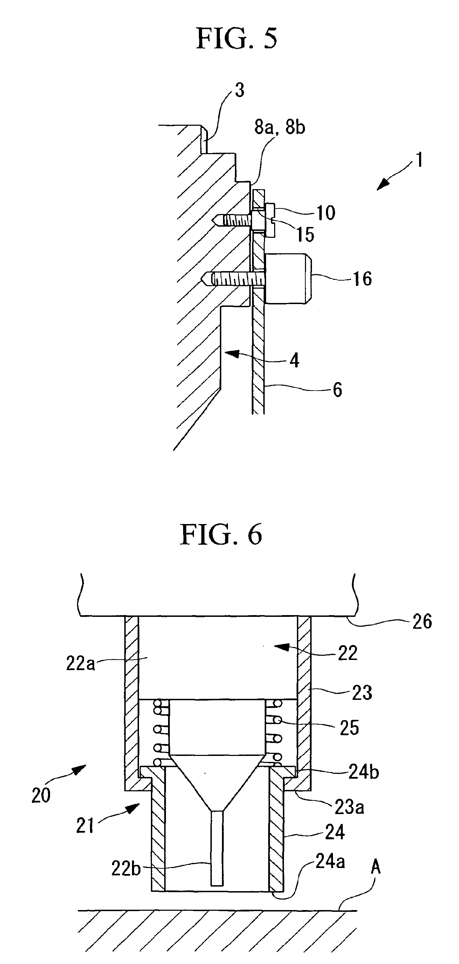

Although in this embodiment the locking mechanism 7 of the covering member 6 is composed of the spring washers 13, the indentations 11, and the protrusions 12, the locking mechanism 7 can also be composed of, for example, arc-shaped slots 15 formed on the covering member 6 and locking screws 16 screwed into screw holes formed on the flat surfaces 8a and 8b of the objective lens 4 through the slots 15, as shown in Figs. 4 and 5. With this structure, when loosened, the locking screws 16 can move along the slots 15, so that the covering member 6 can be swung with respect to the objective lens 4. On the other hand, the covering member 6 can be fixed to the objective lens 4 at any position by tightening the locking screws 16.

### [Second Embodiment]

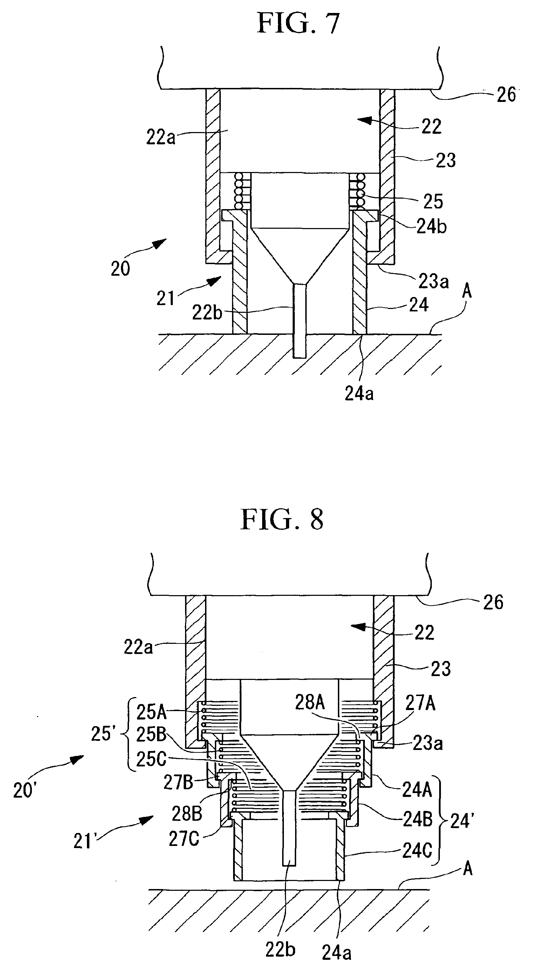

An objective lens unit 20 and an objective lens protector 21 according to a second embodiment of the present invention will now be described with reference to Figs. 6 and 7.

The objective lens unit 20 according to this embodiment includes an objective lens 22 and the objective lens protector 21.

The objective lens protector 21 includes, for example, a substantially cylindrical locking mechanism 23 fixed on a large-diameter portion 22a of the objective lens 22; a substantially cylindrical covering member 24 arranged so as to surround a small-diameter tip 22b of the objective lens 22; and a coil spring (urging member) 25 constantly urging the covering member 24 in the front-end direction onto the locking mechanism 23.

The covering member 24 includes a flange-shaped contact portion 24b in contact with an inner flange-shaped stopper 23a of the locking mechanism 23 such that an edge surface 24a of the covering member 24 extends beyond the front end of the small-diameter tip 22b of the objective lens 22.

The operation of the objective lens unit 20 according to this embodiment with the above-described structure will be described below.

According to the objective lens unit 20 of this embodiment, since the covering member 24 is urged towards the front end of the objective lens 22 due to the effect of the coil spring 25, the small-diameter tip 22b of the objective lens 22 is covered with the covering member 24 in a non-operating state to protect the small-diameter tip 22b from external force.

On the other hand, when the objective lens unit 20 is to be used, the objective lens unit 20 is fixed on a microscope main body 26 by means of a threaded mount (not shown in the figure) provided on the objective lens 22. Thereafter, the small-diameter tip 22b provided at the front end of the objective lens 22 is brought near the specimen A and finally inserted into the specimen A.

At this time, the edge surface 24a of the covering member 24 reaches the specimen A first since the edge surface 24a is arranged near the small-diameter tip 22b such that it extends beyond the front end of the small-diameter tip 22b. Thereafter, when the objective lens unit 20 is further advanced towards the specimen A, the covering member 24 retracts against the urging force of the coil spring 25, causing the small-diameter tip 22b of the objective lens 22 to protrude from the edge surface 24a of the covering member 24. As a result, the exposed small-diameter tip 22b is inserted into the specimen A to allow the interior of the specimen A to be examined.

At this time, the small-diameter tip 22b of the objective lens 22 remains entirely covered with the covering member 24 until it is inserted into the specimen A. After the small-diameter tip 22b has been inserted into the specimen A, the part of the small-diameter tip 22b on the surface of the specimen A and above, i.e., the part except for the tip disposed inside the specimen A, remains covered with the covering member 24. Thus, the small-diameter tip 22b of the objective lens 22 can be prevented from experiencing an external force in a direction at an angle to the optical axis.

In addition, when examination of the specimen A using the objective lens 22 is completed and the small-diameter tip 22b of the objective lens 22 is withdrawn from the specimen A, the covering member 24 is urged in the front-end direction due to the urging force of the coil spring 25. Thus, the edge surface 24a of the covering member 24 remains in contact with the surface of the specimen A until the small-diameter tip 22b of the objective lens 22 is completely extracted from the specimen A. Consequently, there is no danger of the small-diameter tip 22b of the objective lens 22 being exposed, thus preventing external force being applied to the small-diameter tip 22b in a direction at an angle to the optical axis.

More specifically, according to the objective lens unit 20 of this embodiment, the objective lens 22 remains covered with the covering member 24, namely, is not exposed externally, during a transition period from a non-operating state to an operating state and during a transition period from an operating state to a non-operating state, as well as in the non-operating state itself. Thus, the objective lens 22 is protected from damage with the covering member 24.

Although the covering member 24 according to this embodiment can be made of any material, it is preferable that the covering member 24 be made of transparent material. This is because the objective lens 22 is constantly covered with the covering member 24 as described above, and the objective lens 22 covered with the covering member 24 can be seen if the covering member 24 is made of transparent material.

Furthermore, although this embodiment has been described by way of example of the objective lens protector 21 having the single, substantially cylindrical covering member 24, an objective lens protector 21 formed in the shape of a telescope, as shown in Fig. 8, having a covering member 24' composed of a plurality of cylindrical bodies 24A to 24C and an urging member 25' composed of a plurality of coil springs 25A to 25C may be employed instead. The cylindrical body 24A includes an inner flange 28A, and the neighboring cylindrical body 24B includes a flange-shaped contact portion 27B so that the coil spring 25B is interposed between the inner flange 28A and the flange-shaped contact portion 27B. Similarly, the cylindrical body 24B includes an inner flange 28B, and the neighboring cylindrical body 24C includes a flange-shaped contact portion 27C so that the coil spring 25C is interposed between the inner flange 28B and the flange-shaped contact portion 27C.

With this structure, only the cylindrical bodies 24A to 24C need to be moved according to the depth to which the small-diameter tip 22b is inserted into the specimen A. In addition, by deploying the plurality of cylindrical bodies 24A to 24C in the form of multiple tubules, the height of the covering member 24' can be reduced in a fully retracted state.

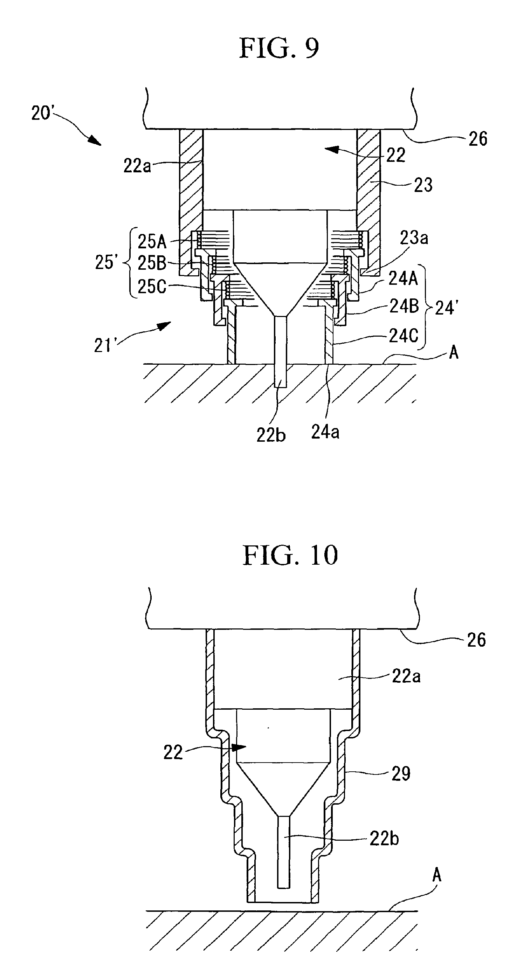

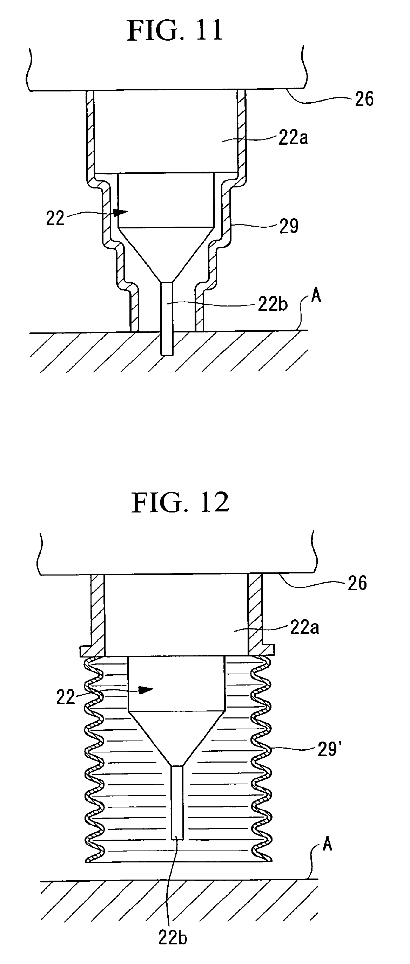

Furthermore, although this embodiment has been described by way of example of the single cylindrical covering member 24 or the covering member 24' having a plurality of cylindrical bodies 24A to 24C, a covering member 29 made of an elastic material, such as rubber, may be employed instead, as shown in Figs. 10 and 11. By doing so, the covering member 29 covers the small-diameter tip 22b of the objective lens 22 in a non-operating state, as shown in Fig. 10, whereas the covering member 29 is elastically deformed in an operating state, as shown in Fig. 11, to allow only the front end of the small-diameter tip 22b to be inserted into the specimen A while still covering the part of the small-diameter tip 22b above the specimen A.

Furthermore, the covering member 29 made of an elastic member is not limited to the type shown in Figs. 10 and 11; any type of covering member can be employed. For example, a bellows-like covering member 29', as shown in Fig. 12, can be employed.

### [First Reference Example]

An invention according to a first reference example of the present invention will now be described.

In typical microscopes for use on sites such as medical institutions and food factories, finger-contact surfaces of the microscopes are coated with antibacterial agents to endow the finger contact surfaces with antibacterial properties, or alternatively, such finger-contact surfaces are formed of members containing antibacterial agents (e.g., see Japanese Unexamined Patent Application Publication No. 9-146005). According to these microscopes, particular bacteria residing on a surface treated with such an antibacterial coating or made of such an antibacterial member die, thus preventing spreading of the bacteria.

However, antibacterial agents are effective only for particular bacteria and are not effective for some other bacteria.

Another problem is that the coating on a surface may come off due to friction and its antibacterial effect may be lost. Members containing antibacterial agents also have a problem in that they can be formed of only particular materials such as resin. For this reason, the frame of a microscope objective lens formed of resin has low rigidity compared with a frame formed of metal, such as stainless steel, which makes it difficult to manufacture a thinner frame. Consequently, it is difficult to design a frame having a tip with a small diameter.

For so-called in-vivo examination of a living organism, which has recently become increasingly important in the medical and biological fields, the tip of an objective lens needs to be inserted into an opening formed by incising the skin of a living organism. Therefore, a larger opening needs to be formed if the tip of the objective lens is large in diameter. This imposes extreme stress on the living organism. It is difficult to keep the object under examination, namely, a living organism, such as a laboratory animal, healthy over an extended period of time if the laboratory animal is subjected to extreme stress, and eventually in-vivo examination of the living organism cannot be achieved.

The invention according to this first reference example has been conceived in light of these circumstances, and it is an object of this invention to provide a microscope objective lens and a microscope objective lens unit which allow a tip thereof to be inserted with minimal invasiveness into a laboratory animal, serving as the object to be examined, and which can be disinfected by immersing the entire body thereof in a sterilizing solution or can be sterilized with an autoclave to prevent the laboratory animal from being infected with bacteria.

In order to achieve the above-described object, the invention according to this reference example employs the following solutions.

A first aspect of the invention according to this reference example relates to a microscope objective lens wherein a tip and a circumferential portion of a barrel containing a plurality of lenses are processed to seal off an inner space containing the plurality of lenses from outside. The microscope objective lens includes a sealing member for sealing a gap between a cap and the barrel when the cap is placed over a rear end portion of the barrel so as to cover an opening formed at the rear end portion.

According to the first aspect of the invention of this reference example, the opening at the rear end portion of the barrel is covered with the cap and the gap between the barrel and the cap is sealed with the sealing member provided at the rear end portion. Since the tip and the circumferential surface of the barrel are sealed watertight, the entire body of the barrel is sealed by putting on the cap. Because of this, a sterilizing solution is prevented from entering the inner space containing the lenses even when the entire body of the barrel is immersed in the sterilizing solution. Therefore, bacteria on the outer surface of the barrel of the microscope objective lens can be killed with the sterilizing solution. Furthermore, since the barrel can be disinfected for each use, long-term use of the microscope objective lens is possible.

A second aspect of the invention according to this reference example relates to a microscope objective lens wherein a tip and a circumferential portion of a barrel containing a plurality of lenses are processed to seal off an inner space containing the plurality of lenses from outside. Th microscope objective lens includes a sealing surface brought into close contact with a sealing member provided on a cap to seal a gap between the cap and the barrel when the cap is placed over a rear end portion of the barrel so as to cover an opening formed at the rear end portion.

According to the second aspect of the invention of this reference example, the opening at the rear end portion of the barrel can be covered with the cap and the gap between the barrel and the cap can be sealed by bringing the sealing member provided on the cap into close contact with the sealing surface at the rear end portion of the barrel. Since the tip and the circumferential surface of the barrel are sealed watertight, the entire body of the barrel is sealed by putting on the cap. Because of this, a sterilizing solution is prevented from entering the inner space containing the lenses even when the entire body of the barrel is immersed in the sterilizing solution. Therefore, bacteria on the outer surface of the barrel of the microscope objective lens can be killed with the sterilizing solution. Furthermore, since the barrel can be disinfected for each use, long-term use of the microscope objective lens is possible.

A third aspect of the invention according to this reference example relates to a microscope objective lens, wherein a tip and a circumferential portion of a barrel containing a plurality of lenses are processed to seal off an inner space containing the plurality of lenses from outside, a transparent parallel plate is arranged at a rear end portion of the barrel so as to cover an opening formed at the rear end portion, and an outer peripheral edge of the parallel plate is bonded watertight with the barrel by means of adhesive.

According to the third aspect of the invention of this reference example, not only is the opening covered with the parallel plate arranged on the opening at the rear end portion of the barrel, but also the gap between the outer peripheral edge of the parallel plate and the barrel is sealed with adhesive. Since the tip and the circumferential surface of the barrel are sealed watertight, the entire body of the barrel is sealed. Because of this, a sterilizing solution is prevented from entering the inner space containing the lenses even when the entire body of the barrel is immersed in the sterilizing solution. Therefore, bacteria on the outer surface of the barrel of the microscope objective lens can be killed with the sterilizing solution. Furthermore, since the barrel can be disinfected for each use, long-term use of the microscope objective lens is possible. Furthermore, since disinfection can be carried out without a cap, the entire outer surface of the microscope objective lens can be disinfected more reliably.

In the third aspect of the invention according to the above-described reference example, the parallel plate is preferably arranged at an oblique angle to an optical axis.

By doing so, for epi-illumination where illumination light enters from the opening at the rear end portion of the microscope objective lens along the optical axis, the illumination light is prevented from being reflected at the surface of the parallel plate, returning along the optical axis, and being detected by a photodetector. As a result, a clear image can be produced by preventing flare from occurring in the acquired image.

In the third aspect of the invention according to the above-described reference example, optical elements exposed at the tip and the opening formed at the rear end portion of the barrel are preferably made of fused silica, sapphire, light-transmitting YAG, or lanthanum glass.

With this structure, sterilization processing with an autoclave can be carried out.

A fourth aspect of the invention according to this reference example relates to a microscope objective lens unit including the microscope objective lens according to one of the first and second aspects of the invention of the above-described reference example and a cap detachably mounted on the rear end portion of the microscope objective lens to seal the opening formed at the rear end portion.

According to the fourth aspect of the invention of this reference example, the microscope objective lens unit having the cap mounted on the opening at the rear end portion of the microscope objective lens can be immersed in a sterilizing solution to efficiently disinfect the entire outer surface thereof.

According to the first to fourth aspects of the invention of this reference example, the tip of the barrel can be inserted into an object to be examined, namely, a laboratory animal, less invasively, and furthermore, the microscope objective lens unit can be completely immersed in a sterilizing solution for disinfection or can be sterilized in an autoclave. Therefore, the laboratory animal can be prevented from being infected with hazardous bacteria or viruses, thus allowing long-term in-vivo examination of the laboratory animal.

### [First Reference Embodiment of First Reference Example]

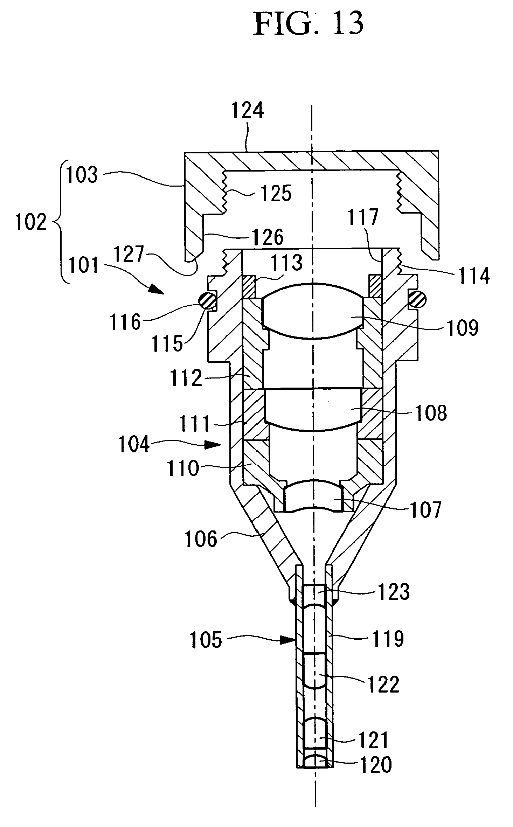

A microscope objective lens 101 and a microscope objective lens unit 102 according to a first reference embodiment of a first reference example will now be described with reference to Figs. 13 to 16.

Referring to Fig. 13, the microscope objective lens unit 102 according to this reference embodiment includes the microscope objective lens 101 and a cap 103 mounted on the rear end portion of the microscope objective lens 101.

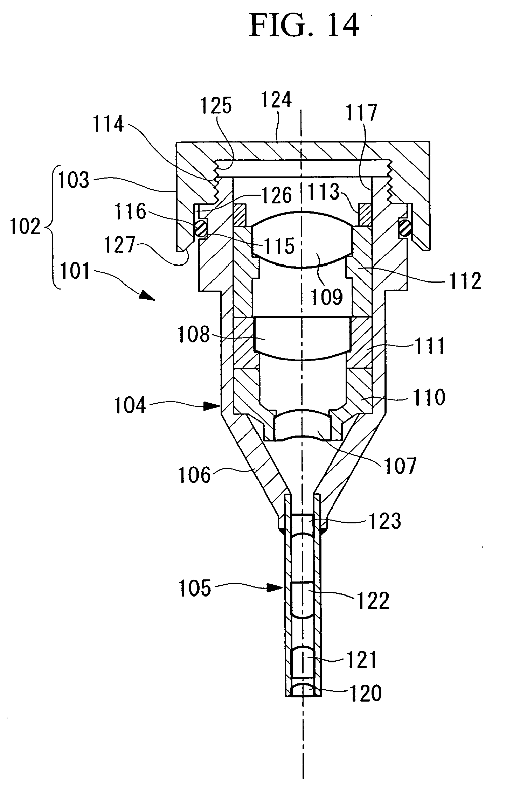

Referring to Figs. 13 and 14, the microscope objective lens 101 according to this reference embodiment includes an adaptor lens unit 104 mounted on a microscope main body (not shown in the figure) or a revolver provided on the microscope main body and a small-diameter lens unit 105 arranged at the front end of the adaptor lens unit 104.

The adaptor lens unit 104 holds a plurality of lenses 107 to 109 in an adaptor barrel 106 having a relatively large diameter, equivalent to that of a typical microscope objective lens, with holders 110 to 112 and a holder retaining ring 113. A threaded mount 114 to be screwed into a screw hole on the microscope main body or a revolver is formed at the rear end portion of the adaptor barrel 106. Furthermore, a circumferential groove 115 is formed around the entire outer circumferential surface near the rear end portion of the adaptor lens unit 104, and an O-ring (sealing member) 116 is disposed in the circumferential groove 115.

At the rear end portion of the adaptor lens unit 104, the adaptor barrel 106 contains the lens 109 disposed at the rearmost end thereof and the holder 112 holding the lens 109. Furthermore, an opening 117 from which the holder retaining ring 113 is exposed is formed at the rear end portion of the adaptor lens unit 104. The holders 110 to 112 holding the lenses 107 to 109 are inserted in that order into the adaptor barrel 106 through the opening 117 and are finally secured with the holder retaining ring 113.

Referring to Figs. 13 and 14, the small-diameter lens unit 105 arranged at the front end of the adaptor lens unit 104 includes a small-diameter barrel 119 sufficiently small in diameter compared with the above-described adaptor barrel 106; and a plurality of lenses 120 to 123 held in the small-diameter barrel 119. The small-diameter barrel 119 is made of a biocompatible metal, such as stainless steel, and is about 20 mm in length and about 1 mm to 2 mm in diameter. The thickness of the small-diameter barrel 119 is from about 0.1 mm to 0.2 mm.

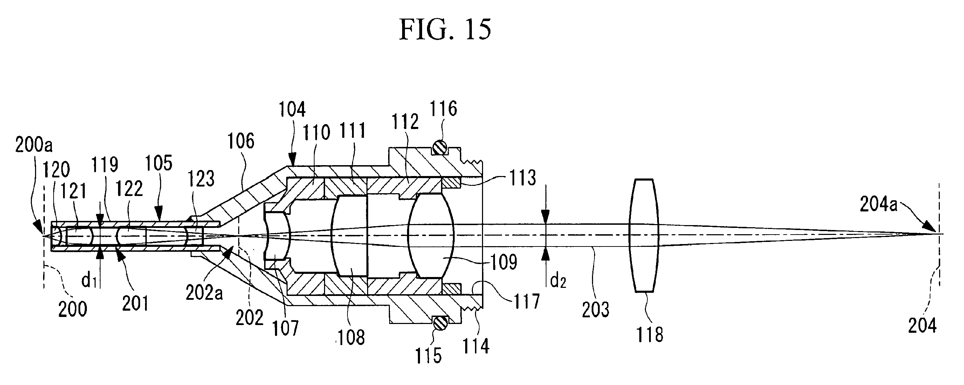

The optical significance of combining the small-diameter lens unit 105 and the adaptor lens unit 104 will be described below with reference to Fig. 15.

Object light emitted from a single point 200a on an object plane 200 is converted into a first collimated beam 201 with a diameter d1 via the front lens 120 and the lens 121 of the small-diameter lens unit 105. The first collimated beam 201 further passes through the lenses 122 and 123 in the small-diameter lens unit 105 and is focused at a single point 202a on an intermediate image plane 202. Then, the first collimated beam 201 is converted into a second collimated beam 203 with a diameter d2 via the lenses 107, 108, and 109 in the adaptor lens unit 104. The second collimated beam 203 is focused at a single point 204a on a final image plane 204 by an imaging lens 118 arranged in the microscope main body.

In order to construct the small-diameter barrel 119 with a diameter of 1 mm to 2 mm, the first collimated beam 201 needs to have a diameter d1 of about 0.5 mm to 1 mm. However, the following problem arises if this first collimated beam 201 is incident as-is upon the imaging lens 118. More specifically, since a collimated beam which is emitted from an objective lens and is incident upon an imaging lens has a diameter of about 5 mm or more for typical microscope optical systems, detection systems and observation systems to be arranged on the image plane 204 are designed based on a spatial resolution determined by the imaging NA at a beam diameter of 5 mm. Under this assumption, when a collimated beam with a diameter from 0.5 mm to 1 mm is incident upon an imaging lens, the magnification is increased excessively relative to the resolution of the observation system or the light detection efficiency of the detection system is decreased.

To overcome such a problem, the diameter of the collimated beam 201 should be increased. In this embodiment, the lenses 122 and 123 in the small-diameter lens unit 105 and the lenses 107, 108, and 109 in the adaptor lens unit 104 constitute one beam expander. Therefore, the problem is overcome by appropriately determining the beam magnification of this beam expander. Assuming that, for example, d1 = 1 mm, a beam magnification of 5 results in d2 = 5 mm, which prevents the above-described problem from arising.

The adaptor barrel 106 of the adaptor lens unit 104 is engaged with the small-diameter barrel 119 of the small-diameter lens unit 105 to fix each other in place, and furthermore, the joint between the adaptor barrel 106 and the small-diameter barrel 119 is sealed with adhesive. Furthermore, the gap between the lens 120 and the small-diameter barrel 119 is also completely sealed with adhesive. In addition, the holes and gaps at the tip and on the outer circumferential surface of the adaptor lens unit 104 and the small-diameter lens unit 105 are all filled with adhesive (alternatively, with any member such as a gasket or an O-ring). By doing so, the barrels 106 and 119 containing the lenses 107 to 109 and the lenses 120 to 123 are entirely sealed, except for the opening 117 of the adaptor barrel 106, to completely shield the inner spaces of the barrels 106 and 119 from the outside.

Referring back to Fig. 13, the cap 103 includes an end plate 124 which completely covers the opening 117 at the rear end portion of the adaptor barrel 106; a female threaded portion 125 screwed into the threaded mount 114 formed on the adaptor barrel 106; and an inner sealing surface 126 which is disposed so as to face the circumferential groove 115 in the radial direction as the female threaded portion 125 is engaged with the threaded mount 114 and which presses the O-ring 116 disposed in the circumferential groove 115 to achieve a tight seal. A tapered surface 127 guides the O-ring 116 in the circumferential groove 115 onto the inner sealing surface 126.

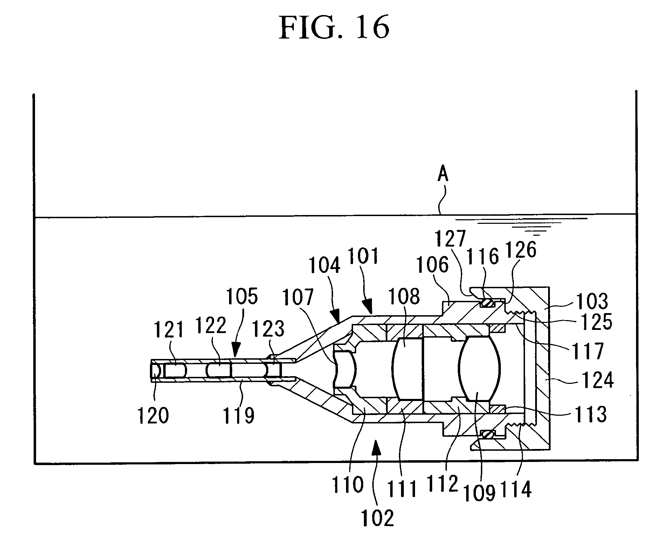

In the microscope objective lens 101 and the microscope objective lens unit 102 with the above-described structure according to this reference embodiment, a tapered surface 127 allows the O-ring 116 in the circumferential groove 115 to be guided onto the inner sealing surface 126 and to be pressed by a predetermined pressing member by screwing the female threaded portion 125 of the cap 103 into the threaded mount 114 of the adaptor barrel 106. Thus, the gap between the cap 103 and the adaptor barrel 106 is completely sealed. Thus, since the opening 117 of the adaptor barrel 106 is covered with the cap 103, the microscope objective lens unit 102 can be immersed entirely in sterilizing solution A to disinfect the entire outer surface thereof, as shown in Fig. 16.

In short, according to the microscope objective lens 101 of this reference embodiment, the cap 103 can be mounted on the microscope objective lens 101 and immersed in sterilizing solution A to sufficiently disinfect it each time it is used. Therefore, since there is no danger of the antibacterial properties being degraded over time, unlike microscope objective lenses coated with antibacterial agents, the microscope objective lens 101 of this reference embodiment can be repeatedly used over a long period of time.

For sterilizing solution A, alcohol (e.g., ethanol for disinfection), glutaral (e.g., CidexPlus manufactured by Johnson & Johnson), or peracetic acid can be used.

In addition, if the small-diameter barrel 119 of the small-diameter lens unit 105 is formed of metal, the thickness of the small-diameter barrel 119 can be reduced while still ensuring sufficient rigidity. Thus, unlike resin materials containing antibacterial agents, which require a certain thickness, the width of the tip of the microscope objective lens 101 can be made sufficiently small. As a result, the interior of a specimen, such as a laboratory animal, can be examined with minimal invasiveness, more specifically, without having to make a wide incision in the skin of the laboratory animal. Since bacteria can be prevented from attaching or proliferating at the tip through adhoc or periodic disinfection, long-term in-vivo examination of a specimen, such as a laboratory animal, can be achieved while keeping the laboratory animal healthy.

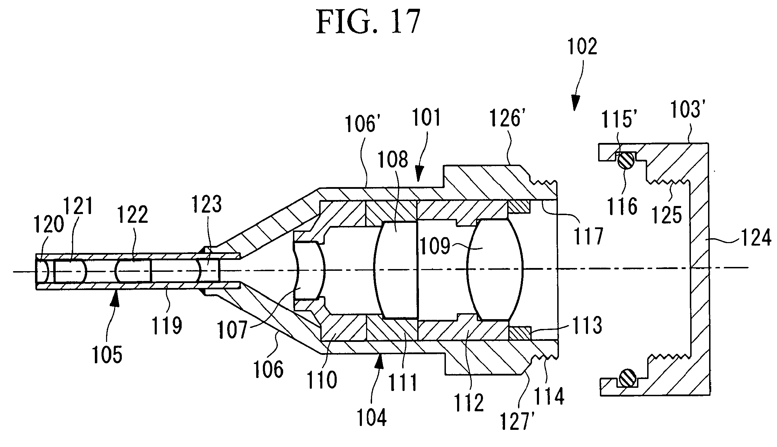

In the microscope objective lens 101 and the microscope objective lens unit 102 according to this reference embodiment, the gap between the cap 103 and the adaptor barrel 106 is sealed by the O-ring 116 disposed in the circumferential groove 115 formed on the adaptor barrel 106 of the microscope objective lens 101 by means of the inner sealing surface 126 formed on the cap 103. Alternatively, a circumferential groove 115' may be formed on the inner surface of a cap 103' and the O-ring 116 may be arranged in the circumferential groove 115', as shown in Fig. 17. In this case, a sealing surface 126' for pressing the O-ring 116 is formed at a position, on the outer circumferential surface of an adaptor barrel 106', which faces the circumferential groove 115' when the cap 103' is tightened. A tapered surface 127' guides the O-ring 116 in the circumferential groove 115' onto the sealing surface 126'.

Although the O-ring 116 is pressed in the radial direction between the adaptor barrel 106 and the cap 103 in the above-described example, the adaptor barrel 106 and the cap 103 may be provided with flanges (not shown in the figure) for pressing the O-ring 116 in the axial direction to seal the gap between the adaptor barrel 106 and the cap 103 instead.

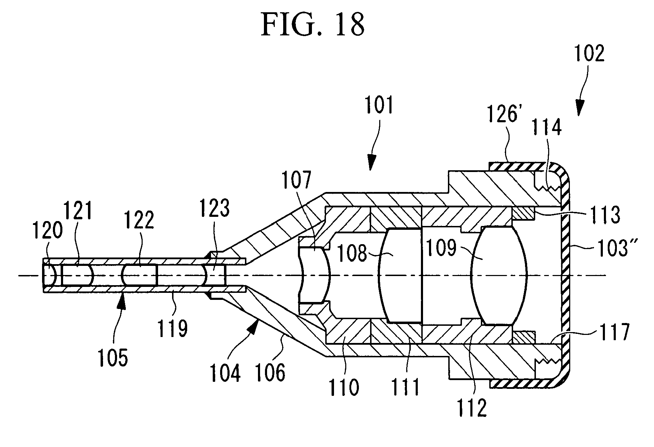

Furthermore, although the cap 103 is mounted by means of the threaded mount 114 formed on the adaptor barrel 106 in the above-described example, a cap 103" formed of an elastic member, such as rubber, may be disposed so as to cover the opening 117 at the rear end portion of the adaptor barrel 106 to secure the cap 103" due to friction between the cap 103" and the opening 117, as shown in Fig. 18. Also in this case, the sealing surface 126', which is in close contact with the inner surface of the cap 103" to seal the gap between the cap 103" and the adaptor barrel 106, is provided on the outer circumferential surface of the adaptor barrel 106.

### [Second Reference Embodiment of First Reference Example]

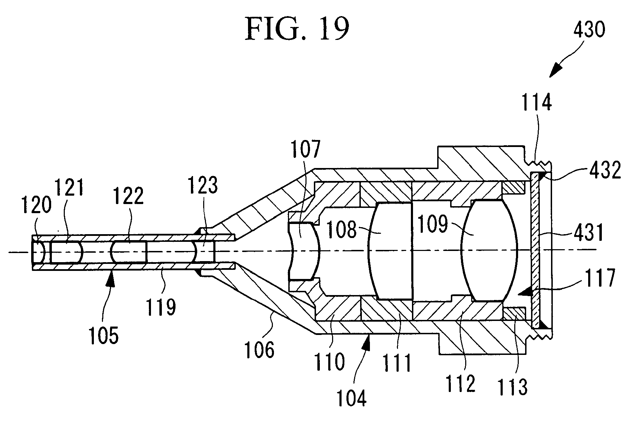

A microscope objective lens 430 according to a second reference embodiment in the first reference example will now be described with reference to Fig. 19.

For the description of this reference embodiment, components that are the same as or equivalent to those of the microscope objective lens 101 according to the above-described first reference embodiment are denoted by the same reference numerals, and such components will not be described again.

Referring to Fig. 19, the microscope objective lens 430 according to this reference embodiment includes a parallel plate 431 made of transparent glass in the opening 117 at the rear end portion of the adaptor barrel 106. The parallel plate 431 is arranged so as to completely seal off the opening 117 of the adaptor barrel 106, and the gap between the outer peripheral edge thereof and the inner surface of the opening 117 is filled with an adhesive 432.

According to the microscope objective lens 430 of this reference embodiment with the above-described structure, since the opening 117 is sealed watertight by the parallel plate 431, the microscope objective lens 430 can be immersed as-is in sterilizing solution A without having to put on the cap 103. Therefore, the second reference embodiment is more advantageous in that the part covered by the cap 103 in the first reference embodiment can come into contact with sterilizing solution A for disinfection.

In addition, according to the parallel plate 431 made of transparent glass, light can pass through the parallel plate 431 and has almost no adverse effect on imaging using illumination light and observation light.

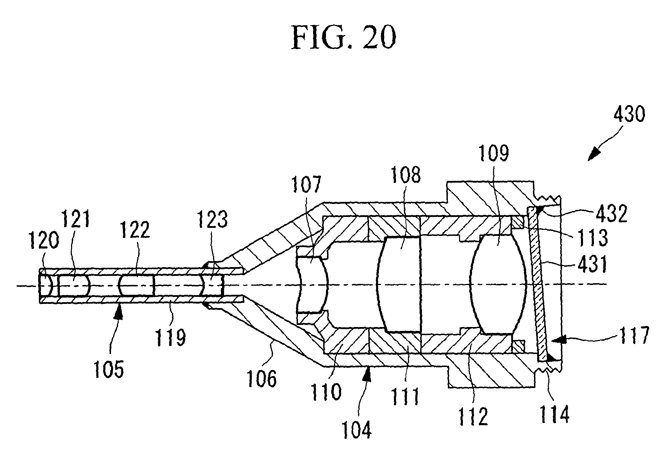

In this reference embodiment, the parallel plate 431 is arranged so as to be perpendicular to the optical axis, as shown in Fig. 19. Alternatively, the parallel plate may also be arranged at a predetermined angle relative to the optical axis, as shown in Fig. 20. By doing so, even if illumination light is reflected at a surface of the parallel plate 431 in the case of epi-illumination, the illumination light is prevented from returning along the same light path. This prevents the illumination light from interfering with the observation light.

Furthermore, in this reference embodiment, the lens 120 and the parallel plate 431, which are exposed from the adaptor barrel 106 and the small-diameter barrel 119, may be formed of fused silica, sapphire, light-transmitting yttrium aluminum garnet (YAG), or lanthanum glass. With this structure, the heat resistance properties and the vapor resistance properties can be enhanced to allow the lens 120 and the parallel plate 431 to be sterilized in an autoclave.

For lanthanum glass, S-LAH58 manufactured by Ohara Inc. can be employed, for example.

In this case, the adaptor barrel 106 and the small-diameter barrel 119 are preferably made of stainless steel. In addition, the lens 120 and the parallel plate 431 are preferably bonded with the adaptor barrel 106 and the small-diameter barrel 119 by soldering or brazing. In this case, the soldering region or the brazing region on the lens 120 and parallel plate 431 is preferably coated with metal.

Furthermore, in this case, gaps between the adaptor barrel 106 and the small-diameter barrel 119 are preferably sealed by laser welding around the entire perimeter thereof or by inserting a metal (e.g., aluminum) gasket therebetween.

### [Second Reference Example]

An invention according to a second reference example of the present invention will now be described.

In the field of electrophysiology, experiments for measuring potential or electrical current in a small region of a living organism by the use of an electron microscope and membrane potential-sensitive dye are commonly conducted. For example, for patch clamping, which is a typical experimental technique for such purposes, a glass pipette electrode is applied to a cell membrane of a cultured cell or a tissue section, serving as the specimen, in a container filled with electrolyte to measure electrical current flowing across the cell membrane. In such an experiment, an upright microscope provided with an immersion objective lens is often used as an optical image observation unit for observing the specimen.

Furthermore, the immersion objective lens has a plastic cap placed on the tip of the barrel to electrically insulate the specimen from the microscope main body. By insulating the specimen from the microscope in this manner, free-space electromagnetic waves captured by the microscope, which acts as an antenna, are prevented from entering the specimen as electrical current noise. Such a microscope objective lens having an insulated tip is disclosed in, for example, Japanese Unexamined Patent Application Publication No. 9-80314.

Recently, in the field of electrophysiology, not only cultured cells or cell sections but also particular regions in an individual living organism have been studied and examined. In short, there is a need for a solution to the challenge of conducting electrophysiological experiments while carrying out in-vivo examination of living organisms.

However, the microscope objective lens disclosed in Japanese Unexamined Patent Application Publication No. 9-80314 is problematic with respect to the following point.

Since the cap which is placed over the tip of the objective lens is made of plastic to achieve electrical insulation in the case of the objective lens disclosed in Japanese Unexamined Patent Application Publication No. 9-80314, the front lens, that is, the optical component at the frontmost end is supported by this plastic cap. This means that, for in-vivo examination where this objective lens is inserted into the body of a laboratory animal, the plastic cap needs to have a large thickness to ensure sufficient rigidity for the objective lens, and therefore, the diameter of the tip cannot be made small.

For in-vivo examination, the skin of a living organism needs to be incised to form an opening through which the tip of the objective lens is inserted. Therefore, the opening needs to be large if the tip inserted through the opening has a large diameter, which imposes extreme stress on the living organism. If extreme stress is imposed on the living organism, it is not possible to keep the laboratory animal, which is the object to be examined, healthy over an extended period of time, and therefore, it is difficult to conduct electrophysiological experiments while carrying out in-vivo examination of the laboratory animal.

The invention according to this second reference example has been conceived in light of these circumstances, and it is an object of the invention to provide a microscope objective lens, a microscope, and an electrical insulator in which it is possible to insert the tip of the objective lens into a laboratory animal, serving as the object to be examined, less invasively and to electrically insulate the tip of the objective lens.

To achieve the above-described object, the invention according to the second reference example employs the following solutions.

A fifth aspect of the invention according to this reference example relates to a microscope objective lens which includes a metal barrel holding a front lens; and an electrical insulator for electrically insulating the barrel from a microscope main body.

According to the fifth aspect of the invention of this reference example, the barrel is electrically insulated from the microscope main body by the electrical insulator. Therefore, when the front end of the microscope objective lens is inserted into a specimen, such as a laboratory animal, for electrophysiological examination, free-space electromagnetic waves captured by the microscope, which acts as an antenna, are prevented from entering the specimen in the form of electrical current noise. In the fifth aspect, if the barrel holding the front lens is made of metal such as stainless steel, the thickness of the barrel can be reduced while still ensuring sufficient rigidity thereof.

For example, in a case where the diameter of the front end, namely, the part to be inserted into the laboratory animal, of the barrel is about 1 mm to 2 mm, even a thickness of about 0.1 mm to 0.2 mm can ensure sufficient rigidity. Therefore, an incision to be made in a specimen, such as a laboratory animal, can be made small enough to reduce the stress placed on the specimen.

In the fifth aspect of the invention according to the above-described reference example, the electrical insulator is preferably disposed at least 20 mm away from the front lens.

The part provided with the electrical insulator needs to be relatively large in diameter to ensure a certain level of rigidity. By providing the electrical insulator at least 20 mm away from the front lens, the front end portion of the barrel on which the front lens is mounted can have a small diameter up to 20 mm from the front lens.

If the laboratory animal to be examined is a mouse, which is typically about 40 mm in thickness, the tip can be inserted from the outside of the mouse to almost freely place the front lens at any site in the mouse by providing the electrical insulator at least 20 mm away from the front lens.

A sixth aspect of the invention according to this reference example relates to a microscope which includes the microscope objective lens of the fifth aspect of the invention according to the above-described reference example.

According to the sixth aspect of the invention of this reference example, when the front end of the microscope objective lens is inserted into a specimen, such as a laboratory animal, for electrophysiological examination, free-space electromagnetic waves captured by the microscope, which acts as an antenna, are prevented from entering the specimen in the form of electrical current noise. Furthermore, when the front end of the microscope objective lens is inserted into a specimen, such as a laboratory animal, it is not necessary to make a large incision in the specimen. This significantly reduces the stress placed on the specimen and allows in-vivo examination of the specimen over an extended period of time.

A seventh aspect of the invention according to this reference example relates to an electrical insulator disposed on an optical axis between a microscope objective lens and a microscope main body. The electrical insulator includes a female threaded portion engageable with a male retaining screw for securing the microscope objective lens to the microscope main body; and a male screw having the same shape as that of the male retaining screw engageable with a female retaining thread of the microscope main body.

According to the seventh aspect of the invention of this reference example, the microscope objective lens can be electrically insulated from the microscope main body by screwing the male screw of the electrical insulator into the female retaining thread of the apparatus main body and by screwing the male retaining screw of the microscope objective lens into the female threaded portion of the electrical insulator.

In this case, by standardizing the female threaded portions, the same electrical insulator can be used for a plurality of microscope objective lenses having different magnifications. This means that it is not necessary to prepare one electrically insulating structure for each microscope objective lens, which contributes to cost reduction.

In addition, the same microscope objective lens can be used for normal examination, instead of electrophysiological examination, by removing the electrical insulator.

An eighth aspect of the invention according to this reference example relates to an electrical insulator disposed on an optical axis between a microscope main body and a revolver in which a plurality of microscope objective lenses are held and which can selectively place each of the plurality of microscope objective lenses on the optical axis of the microscope main body. The electrical insulator includes a clutch that can be engaged with a revolver mount for securing the revolver to the microscope main body; and a mount having the same shape as that of the revolver mount.

In a typical microscope apparatus, a revolver is usually mounted on the microscope main body by engaging a revolver mount provided on the revolver with a revolver clutch provided on the microscope main body, and thus microscope objective lenses can be selectively positioned on the optical axis of the microscope main body by turning the revolver. In the present invention, on the other hand, the electrical insulator is connected to the revolver by engaging the clutch with the revolver mount on the revolver, so that the electrical insulator can be secured between the apparatus main body and the revolver by engaging the mount provided on the electrical insulator with the revolver clutch on the apparatus main body.

By doing so, the revolver and the lower sections can be electrically insulated from the microscope main body. This prevents free-space electromagnetic waves captured by the microscope main body from entering the specimen in the form of electrical current noise. In addition, since it is not necessary to provide an insulating structure in the front end of the microscope objective lens, the front end of the microscope objective lens can be made thin so that it can be inserted into the specimen less invasively.

Furthermore, it is not necessary to prepare one electrically insulating structure for each microscope objective lens; in other words, all the microscope objective lenses can be insulated together with the revolver, which contributes to cost reduction.

In the eighth aspect of the invention according to the above-described reference example, the above-described mount may be constructed in a dovetailed form, and the above-described clutch may be constructed in the form of a dovetail mortise that can be engaged with that mount.

With this structure, the revolver can be mounted on the microscope main body easily and with high accuracy, and at the same time, the revolver can be electrically insulated from the microscope main body.

According to the fifth to eighth aspects of the invention of this reference example, the tip of the objective lens can be inserted into an object to be examined, such as a laboratory animal, less invasively, and furthermore, the tip of the objective lens, which is in contact with the object to be examined, is electrically insulated from the microscope main body to prevent electrical current noise from occurring. This allows electrophysiological examination to be conducted with high accuracy.

### [Third Reference Embodiment of Second Reference Example]

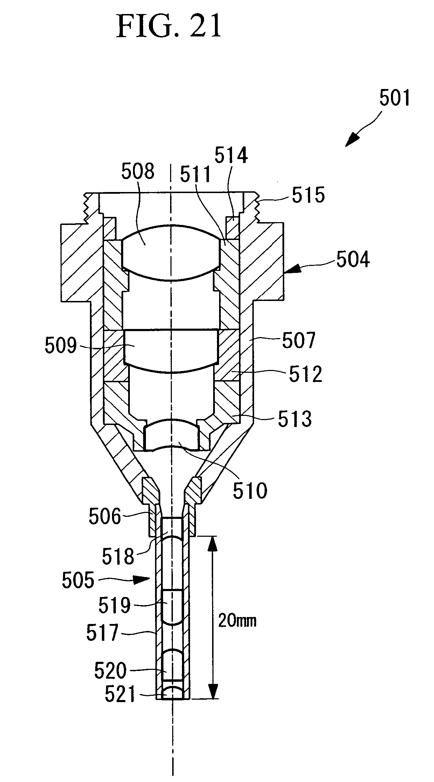

A microscope objective lens, a microscope, and an electrical insulator according to a third reference embodiment in the second reference example will now be described with reference to Figs. 21 to 23.

Referring to Figs. 21 to 23, a microscope objective lens 501 according to this reference embodiment includes an adaptor lens unit 504 screwed into a screw hole 503a of a microscope main body 502 or a revolver 503 provided on the microscope main body 502; a small-diameter lens unit 505 arranged at the front end of the adaptor lens unit 504; and an electrical insulator 506 arranged between the adaptor lens unit 504 and the small-diameter lens unit 505. The adaptor lens unit 504, the small-diameter lens unit 505, and the electrical insulator 506 are fixed to one another with, for example, adhesive.

The adaptor lens unit 504 holds a plurality of lenses 508 to 510 in an adaptor barrel 507 which is relatively large in diameter, equivalent to that of a typical microscope objective lens, with holders 511 to 514. The adaptor barrel 507 includes a threaded mount 515 screwed into the screw hole 503a of the microscope main body 502 or the revolver 503.

The small-diameter lens unit 505 includes a small-diameter barrel 517 sufficiently small in diameter compared with the above-described adaptor barrel 507; and a plurality of lenses 518 to 521 fixed in the small-diameter barrel 517. The small-diameter barrel 517 is made of a biocompatible metal material such as stainless steel, and is about 20 mm in length and about 1 mm to 2 mm in diameter. The thickness of the small-diameter barrel 517 is from about 0.1 mm to 0.2 mm.

The electrical insulator 506 is a member for fixing the small-diameter lens unit 505 to the adaptor lens unit 504 and is made of, for example, electrical insulating material such as resin or ceramic.

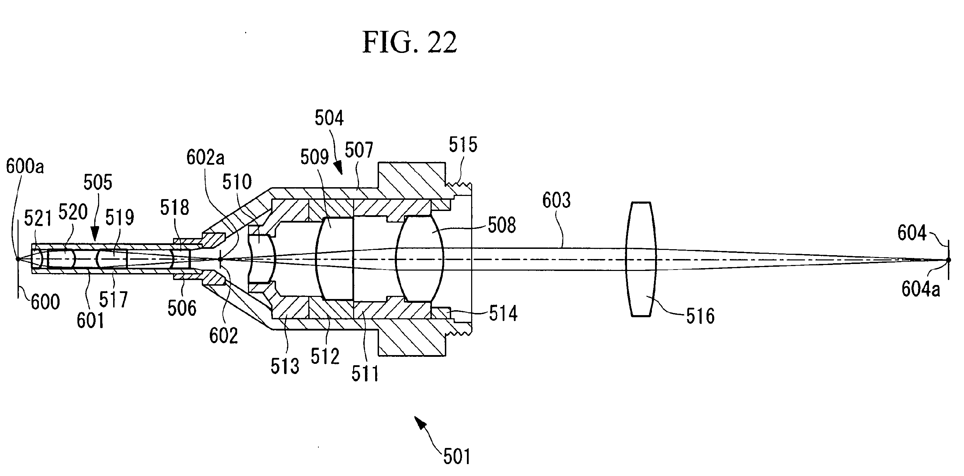

The optical significance of combining the small-diameter lens unit 505 and the adaptor lens unit 504 will be described below with reference to Fig. 22.

Object light emitted from a single point 600a on an object plane 600 is converted into a first collimated beam 601 with a diameter d1 via the front lens 521 and the lens 520 of the small-diameter lens unit 505. The first collimated beam 601 further passes through the lenses 519 and 518 in the small-diameter lens unit 505 and is focused at a single point 602a on an intermediate image plane 602. Then, the first collimated beam 601 is converted into a second collimated beam 603 with a diameter d2 via the lenses 510, 509, and 508 in the adaptor lens unit 504. The second collimated beam 603 is focused at a single point 604a on a final image plane 604 by an imaging lens 516 arranged in the microscope main body 502.

In order to construct the small-diameter barrel 517 with a diameter of 1 mm to 2 mm, the first collimated beam 601 needs to have a diameter d1 of about 0.5 mm to 1 mm. However, the following problem arises in a case where this first collimated beam 601 is incident as-is upon the imaging lens 516. More specifically, since a collimated beam which is emitted from an objective lens and is incident upon an imaging lens has a diameter of about 5 mm or more for typical microscope optical systems, detection systems and observation systems to be arranged on the image plane 604 are designed based on a spatial resolution determined by the imaging NA at a beam diameter of 5 mm. Under this assumption, when a collimated beam with a diameter from 0.5 mm to 1 mm is incident upon an imaging lens, the magnification is increased inappropriately relative to the resolution of the observation system or the light detection efficiency of the detection system is decreased.

To overcome such a problem, the diameter of the collimated beam 601 should be increased. In this reference embodiment, the lenses 519 and 518 in the small-diameter lens unit 505 and the lenses 510, 509, and 508 in the adaptor lens unit 504 constitute one beam expander. Therefore, the problem is overcome by appropriately finding out the beam magnification of this beam expander. Assuming that, for example, d1 = 1 mm, a beam magnification of 5 results in d2 = 5 mm, which prevents the above-described problem from arising.

The operation of the microscope objective lens 501 and the microscope 522 according to this reference embodiment, with the above-described structures, is described below.

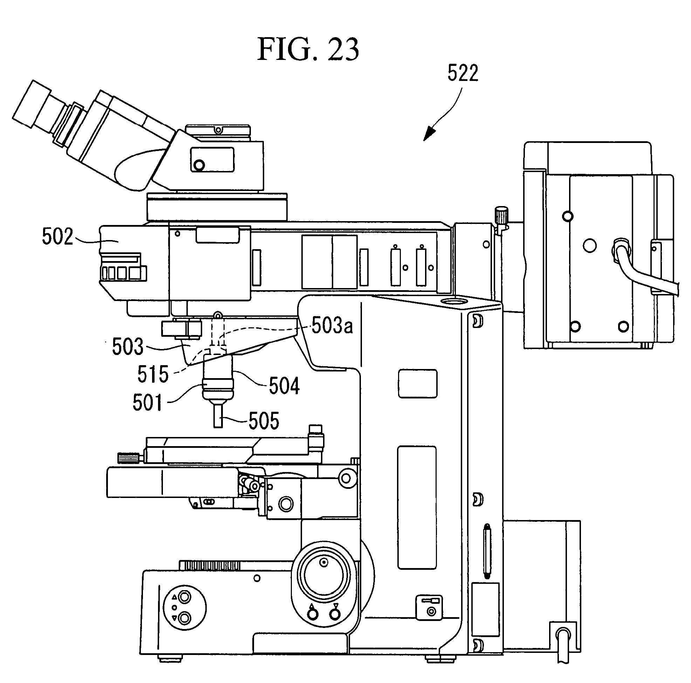

Referring to Fig. 23, according to the microscope objective lens 501 of this reference embodiment, the microscope 522 according to this reference embodiment is realized by screwing the threaded mount 515 of the adaptor lens unit 504 into the screw hole 503a of the microscope main body 502 or the revolver 503.

Since the microscope objective lens 501 includes the small-diameter lens unit 505 for supporting the front lens 521 at the front end and the small-diameter lens unit 505 includes the metal small-diameter barrel 517, sufficient rigidity can be ensured with a diameter of about 1 mm to 2 mm and a thickness of about 0.1 mm to 0.2 mm. Furthermore, since the electrical insulator 506 made of an electrical insulating material such as resin and ceramic is disposed between the adaptor lens unit 504, which is about 20 mm away from the front end of the small-diameter lens unit 505, and the small-diameter lens unit 505, it can be realized as a member with a diameter large enough compared with the small-diameter barrel 517 of the small-diameter lens unit 505. Therefore, the electrical insulator 506 can also exhibit

### sufficiently high rigidity.

According to the microscope objective lens 501 and the microscope 522 of this reference embodiment, with the above-described structure, since the small-diameter lens unit 505 supporting the front lens 521 can be made not only thin but also sufficiently robust, the small-diameter lens unit 505 can be inserted into a specimen such as laboratory animal less invasively. Since less stress is imposed on the specimen as a result of the above-described structure, long-term in-vivo examination of the specimen can be carried out.

In addition, since the small-diameter lens unit 505 is sufficiently long, it can be inserted through a small hole formed on the surface of the body a laboratory animal, such as a mouse or a rat, to examine any site in the body of the small laboratory animal.

Moreover, according to the microscope objective lens 501 and the microscope 522 of this reference embodiment, the small-diameter lens unit 505 is electrically insulated from the adaptor lens unit 504, the revolver 503, and the microscope main body 502 by the electrical insulator 506, and the small-diameter lens unit 505, even if made of metal, does not cause free-space electromagnetic waves captured by the microscope main body 502, which acts as an antenna, to enter the specimen in the form of electrical current noise. This allows electrophysiological examination for measuring electrical current flowing in the specimen to be conducted with less noise and high accuracy.

### [Fourth Reference Embodiment of Second Reference Example]

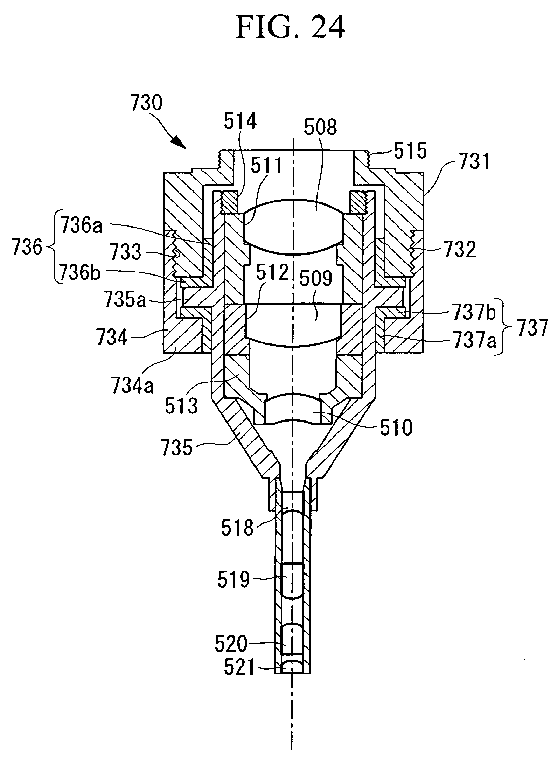

A microscope objective lens according to a fourth reference embodiment of the second reference example will now be described with reference to Fig. 24.

For the description of this reference embodiment, components that are the same as or equivalent to those of the microscope objective lens 501 according to the above-described third reference embodiment are denoted by the same reference numerals, and such components will not be described again.

Referring to Fig. 24, a microscope objective lens 730 according to this reference embodiment includes a holder 731 having on one end thereof a threaded mount 515 to be screwed into the screw hole 503a of the microscope main body 502; a sleeve 734 having a female threaded portion 733 to be screwed into a male screw 732 formed on the other end of the holder 731; a barrel 735 containing lenses 508 to 510 constituting an adaptor lens unit and lenses 518 to 521 constituting a small-diameter lens unit; and electrical insulators 736 and 737 interposed between this barrel 735 and the holder 731 and the sleeve 734.

A flange 735a extending outwards in the radial direction is formed on the outer surface of the barrel 735.

In addition, an inner flange 734a extending inwards in the radial direction is formed on the sleeve 734.

The electrical insulators 736 and 737 include the first insulator 736 provided with a tubular portion 736a interposed between the inner surface of the holder 731 and the outer surface of the barrel 735; and the second insulator 737 provided with a tubular portion 737a interposed between the inner surface of the sleeve 734 and the outer surface of the barrel 735. The first insulator 736 includes a flange-shaped portion 736b interposed between the flange 735a of the barrel 735 and the edge surface of the above-described holder 731 in the axial direction. In addition, the second insulator,737 includes a flange-shaped portion 737b interposed between the flange 735a of the barrel 735 and the inner flange 734a of the sleeve 734 in the axial direction.

By screwing the female threaded portion 733 of the sleeve 734 into the male screw 732 of the holder 731, the flange 735a of the barrel 735 and the flange-shaped portions 736b and 737b of the first and second insulators 736 and 737 are interposed in the axial direction between the edge surface of the holder 731 and the inner flange 734a of the sleeve 734 to fix the barrel 735 to the holder 731 and electrically insulate the barrel 735 from the holder 731 and the sleeve 734.

The lenses 508 to 510 and 518 to 521 and the holders 511 to 514 constituting the adaptor lens unit and the small-diameter lens unit are the same as those in the microscope objective lens 501 according to the above-described third reference embodiment.

According to the microscope objective lens 730 of this reference embodiment, the interior of the specimen can be examined less invasively, as in the third reference embodiment. In particular, not only can sufficient rigidity of the tip supporting the front lens 521 be ensured by employing the metal barrel 735, but also the tip, when in contact with the specimen, can be insulated from the microscope main body 502 by means of the electrical insulators 736 and 737 to prevent the generation of electrical current noise.

In addition, according to this reference embodiment, since the electrical insulators 736 and 737 made of insulating material with low rigidity are arranged not at the small-diameter tip but at a portion sufficiently large in diameter, sufficient rigidity can be ensured. While the rigidity of the electrical insulators 736 and 737 is ensured in this manner, the diameter of the tip supporting the front lens 521 can be kept small. For this reason, less invasive electrophysiological examination of the specimen is possible over an extended period of time.

### [Fifth Reference Embodiment of Second Reference Example]

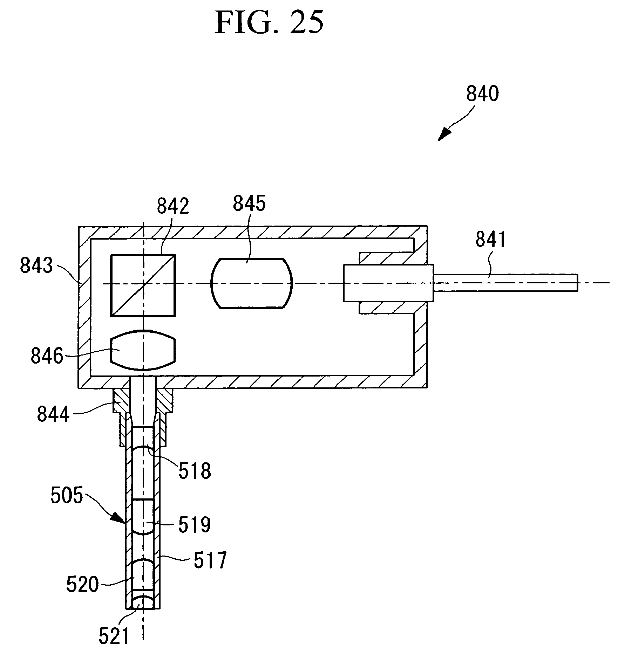

A microscope 840 according to a fifth reference embodiment of the second reference example will now be described with reference to Fig. 25.

The microscope 840 according to this reference embodiment includes the small-diameter lens unit 505 according to the third reference embodiment; a scan head 843 containing a scanner 842 which two-dimensionally scans a laser beam transmitted from an optical fiber 841; and an electrical insulator 844 disposed between the scan head 843 and the small-diameter lens unit 505.

The scan head 843 contains a collimating lens 845 for converting a laser beam transmitted from the optical fiber 841 into collimated light, which is incident upon the scanner 842; and a pupil-projection lens 846 for focusing the laser beam scanned by the scanner 842 to form an intermediate image.

According to the microscope 840 with the above-described structure, when a laser beam from a laser light source (not shown in the figure) enters the scan head 843 via the optical fiber 841, it is converted into collimated light by the collimating lens 845 and is then two-dimensionally scanned by the scanner 842. Thereafter, an intermediate image is formed by the pupil-projection lens 846, is relayed by the small-diameter lens unit 505, and is finally re-focused in front of the front lens 521 at the front end.

By arranging the specimen in front of the front lens 521, fluorescent materials in the specimen are excited by the laser beam to generate fluorescence. The generated fluorescence returns into the small-diameter lens unit 505 and then into the optical fiber 841 via the pupil-projection lens 846, the scanner 842, and the collimating lens 845. Finally, the fluorescence is detected by a photodetector (not shown in the figure) connected to the far end of the optical fiber 841.

In this case, according to the microscope 840 of this reference embodiment, since the small-diameter barrel 517 of the small-diameter lens unit 505, which is brought into contact with or inserted into the specimen, is made of metal, sufficient rigidity of the small-diameter barrel 517 can be ensured even though the thickness of the small-diameter barrel 517 is small. Furthermore, the electrical insulator 844, which is made of a material with relatively low rigidity, is disposed near the rear end of the small-diameter barrel 517 of the small-diameter lens unit 505 so as not to come into contact with the specimen. In this manner, the diameter of the electrical insulator 844 can be made relatively large to ensure sufficient rigidity.

Since the small-diameter barrel 517 of the metal small-diameter lens unit 505 is electrically insulated from the scan head 843 by the electrical insulator 844, electromagnetic waves captured by the scan head 843, which acts as an antenna, are prevented from entering the specimen as electrical current noise. Therefore, electrophysiological examination is possible with less noise during fluoroscopy.

### [Sixth Reference Embodiment of Second Reference Example]

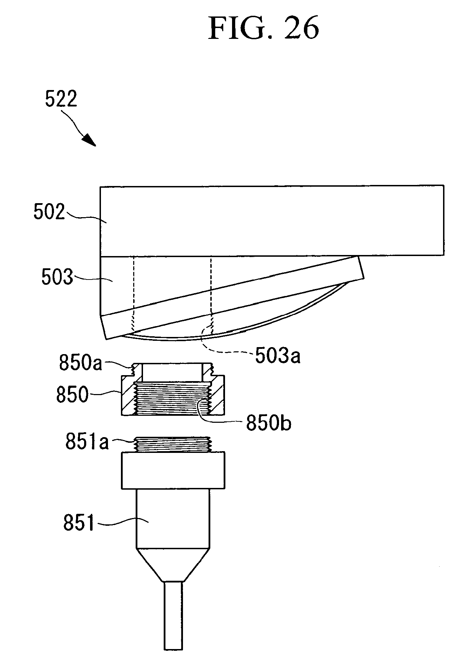

An electrical insulator 850 according to a sixth reference embodiment of the second reference example will now be described with reference to Fig. 26.

The electrical insulator 850 according to this reference embodiment is a tubular member which is interposed between the revolver 503 and a microscope objective lens 851 when the microscope objective lens 851 is mounted on the revolver 503. Referring to Fig. 26, the electrical insulator 850 includes a male screw 850a which can be screwed into the screw hole 503a, provided on the revolver 503, for securing the microscope objective lens 851; and a screw hole 850b which is equivalent to the above-described screw hole 503a. The material of the electrical insulator 850 according to this reference embodiment can be the same as that of the above-described microscope objective lens 501.

In order to utilize the electrical insulator 850 according to this reference embodiment, with the above-described structure, the male screw 850a of the electrical insulator 850 is engaged with the screw hole 503a of the revolver 503 provided on the microscope main body 502. By doing so, the electrical insulator 850 is fixed to the revolver 503. Then, in this state, a male screw 851a of the microscope objective lens 851 is engaged with the screw hole 850b of the electrical insulator 850. As a result, the microscope 522 having the microscope objective lens 851 can be electrically insulated from the microscope main body 502 by the electrical insulator 850.

As described above, the microscope objective lens 851 can be electrically insulated from the microscope main body 502 merely by placing the electrical insulator 850 according to this reference embodiment between the microscope objective lens 851 and the revolver 503. As a result, the barrel of the microscope objective lens 851, even if entirely made of metal, does not cause free-space electromagnetic waves captured by the microscope main body 502, which acts as an antenna, to enter the specimen in the form of electrical current noise. Therefore, not only can the tip of the microscope objective lens 851 be constructed to have a very small diameter, but also the structure of the microscope objective lens 851 can be simplified.

Furthermore, the electrical insulator 850 of this reference embodiment, which is interposed between the microscope objective lens 851 and the revolver 503, can serve as a common member in all microscope objective lenses 851. Therefore, a plurality of microscope objective lenses 851 can be used without insulating structures. This is also advantageous in that cost reduction can be achieved.

Moreover, since a collimated beam usually passes through the connection between the revolver 503 and the microscope objective lens 851, the imaging characteristic is scarcely affected even if the distance between the revolver 503 and the microscope objective lens 851 varies as a result of the electrical insulator 850 being added.

This reference embodiment has been described by way of example of the electrical insulator 850 which is connected to both the screw hole 503a of the revolver 503 and the male screw 851a of the microscope objective lens 851. Alternatively, a portion of the male screw 851a of the microscope objective lens 851 may be formed of an electrical insulator, or a portion of the screw hole 503a of the revolver 503 may be formed of an electrical insulator. This reference embodiment has been described by way of example of the microscope 522 having the revolver 503. Alternatively, in a microscope employing a mechanism where the microscope objective lens 851 is engaged directly with a screw hole (not shown in the figure) formed on the microscope main body 502, an electrical insulator which is engaged with both the screw hole on the microscope main body 502 and the male screw 851a on the microscope objective lens 851 may also be employed.

### [Seventh Reference Embodiment of Second Reference Example]

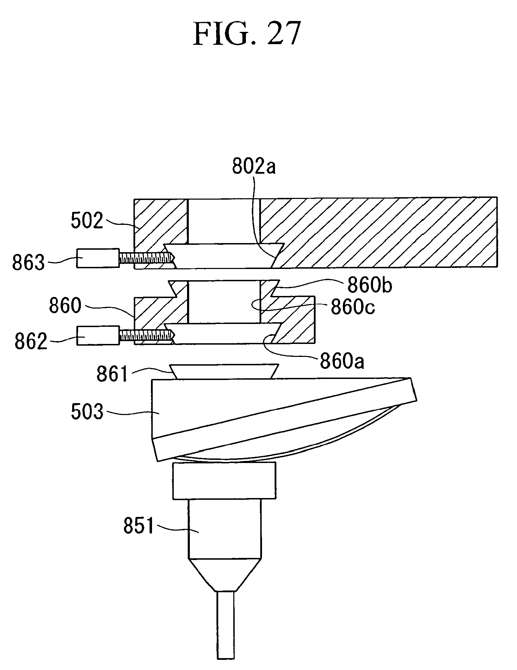

An electrical insulator 860 according to a seventh reference embodiment of the second reference example will now be described with reference to Fig. 27.

The electrical insulator 860 according to this reference embodiment is a member disposed between the revolver 503 and the microscope main body 502 when the revolver 503 is to be mounted on the microscope main body 502. Referring to Fig. 27, the electrical insulator 860 includes a dovetail mortise 860a with which a dovetail tenon 861 provided on the revolver 503 is brought into engagement and a dovetail tenon 860b to be brought into engagement with a dovetail mortise 802a provided on the microscope main body 502.

The electrical insulator 860 according to this reference embodiment further includes a through-hole 860c disposed such that the optical axis of the microscope main body 502 passes therethrough when the dovetail tenon 860b is brought into engagement with the dovetail mortise 802a. Reference numerals 862 and 863 in the figure denote clamp screws for securing the dovetail tenons 861 and 860b, respectively, to be engaged with the dovetail mortises 860a and 802a, respectively. The material of the electrical insulator 860 can be the same as that described above.

According to the electrical insulator 860 with the above-described structure of this reference embodiment, the microscope objective lens 851, together with the revolver 503, can be electrically insulated from the microscope main body 502 merely by placing the electrical insulator 860 according to this reference embodiment between the microscope main body 502 and the revolver 503. As a result, the barrel of the microscope objective lens 851, even if entirely made of metal, does not cause free-space electromagnetic waves captured by the microscope main body 502, which acts as an antenna, to enter the specimen in the form of electrical current noise. Therefore, not only can the tip of the microscope objective lens 851 be constructed to have a very small diameter, but also the structure of the microscope objective lens 851 can be simplified.

In addition, according to the electrical insulator 860 of this reference embodiment, which is simply disposed between the microscope main body 502 and the revolver 503, all microscope objective lenses 851, together with the revolver 503, can be insulated from the microscope main body 502. Therefore, a plurality of microscope objective lenses 851 without insulating structures can be connected directly to the revolver 503. This is advantageous also in that cost reduction can be achieved.

Moreover, since a collimated beam usually passes through the connection between the microscope main body 502 and the revolver 503, the imaging characteristic is scarcely affected even if the distance between the microscope main body 502 and the revolver 503 varies as a result of the electrical insulator 860 being added.

This reference embodiment has been described by way of example of the electrical insulator 860 which is engaged with both the dovetail tenon 861 on the revolver 503 and the dovetail mortise 802a on the microscope main body 502. Alternatively, the dovetail mortise 802a on the microscope main body 502 may be formed of an electrical insulator, or the dovetail tenon 861 on the revolver 503 may be formed of an electrical insulator. In addition, although the revolver 503 is fastened by means of the dovetail tenon 861 and the dovetail mortise 802a in typical microscopes, another fastening mechanism may also be employed. If this is the case, an electrical insulator having that fastening mechanism is required.

Inventions according to the following appended claims are derived from the invention according to the reference embodiments and the second according to the first reference example of the above-described the present invention. Appended Claims:
1. A microscope objective lens wherein a tip and a circumferential portion of a barrel containing a plurality of lenses are processed to seal off an inner space containing the plurality of lenses from outside, comprising:
   a sealing member sealing a gap between a cap and the barrel when the cap is placed over a rear end portion of the barrel so as to cover an opening formed at the rear end portion.
2. A microscope objective lens wherein a tip and a circumferential portion of a barrel containing a plurality of lenses are processed to seal off an inner space containing the plurality of lenses from outside, comprising:
   a sealing surface brought into close contact with a sealing member provided on a cap to seal a gap between the cap and the barrel when the cap is placed over a rear end portion of the barrel so as to cover an opening formed at the rear end portion.
3. A microscope objective lens, wherein
   a tip and a circumferential portion of a barrel containing a plurality of lenses are processed to seal off an inner space containing the plurality of lenses from outside,
   a transparent parallel plate is arranged at a rear end portion of the barrel so as to cover an opening formed at the rear end portion, and
   an outer peripheral edge of the parallel plate is bonded watertight with the barrel by means of adhesive.
4. The microscope objective lens according to appended claim 3, wherein
   the parallel plate is arranged at an oblique angle to an optical axis.
5. The microscope objective lens according to one of appended claims 3 and 4, wherein
   optical elements exposed at the tip and the opening formed at the rear end portion of the barrel are made of fused silica, sapphire, light-transmitting YAG, or lanthanum glass.
6. A microscope objective lens unit comprising:
   the microscope objective lens according to one of appended claims 1 and 2; and
   a cap detachably mounted on the rear end portion of the microscope objective lens to seal the opening formed at the rear end portion.
7. A microscope objective lens comprising:
   a metal barrel holding a front lens; and
   an electrical insulator electrically insulating the barrel from a microscope main body.
8. The microscope objective lens according to appended claim 7, wherein
   the electrical insulator is arranged at least 20 mm away from the front lens.
9. A microscope comprising the microscope objective lens according to one of appended claims 7 and 8.
10. An electrical insulator disposed on an optical axis between a microscope objective lens and a microscope main body, comprising:
   a female threaded portion engageable with a male retaining screw for securing the microscope objective lens to the microscope main body; and
   a male screw having the same shape as that of the male retaining screw engageable with a female retaining thread of the microscope main body.
11. An electrical insulator disposed on an optical axis between a microscope main body and a revolver in which a plurality of microscope objective lenses are held and which can selectively position each of the plurality of microscope objective lenses on an optical axis of the microscope main body, comprising:
   a clutch engageable with a revolver mount for retaining the revolver to the microscope main body; and
   a mount having the same shape as that of the revolver mount.
12. The electrical insulator according to appended claim 11, wherein
   the mount is constructed in a dovetailed form and the clutch is constructed in the form of a dovetail mortise engageable with the mount.

## Claims

1. An objective lens protector mounted on an objective lens or a microscope main body having the objective lens mounted thereon, comprising:
a covering member movable between a protecting position where a front end of the objective lens is covered in a non-operating state and an operating position where the front end of the objective lens is exposed in an operating state.

2. The objective lens protector according to claim 1, further comprising:
a position locking mechanism configured to fix the covering member relative to the objective lens at the protecting position and the operating position.

3. The objective lens protector according to one of claims 1 and 2, wherein
the covering member is formed in a tubular shape surrounding a side surface of the objective lens, and
the covering member is movable in an axial direction of the objective lens between the protecting position and the operating position.

4. The objective lens protector according to claim 3, wherein the covering member includes a plurality of tubular bodies arranged in the shape of a telescope.

5. The objective lens protector according to claim 4, wherein an urging member which urges a corresponding tubular body towards the protecting position is provided between the tubular bodies.

6. The objective lens protector according to claim 3, wherein the covering member is formed in the shape of bellows made of an elastic member that is elastically deformable in an axial direction of the objective lens.

7. The objective lens protector according to one of claims 3 to 6, wherein the covering member is made of a transparent material.

8. An objective lens unit comprising:
an objective lens; and
a covering member which is mounted on the objective lens and which is movable between a protecting position where a front end of the objective lens is covered in a non-operating state and an operating position where the front end of the objective lens is exposed in an operating state.
